# EUROPÄISCHE PATENTSCHRIFT

(11) **EP 0 859 670 B1**
(45) Veröffentlichungstag und Bekanntmachung des Hinweises auf die Patenterteilung: **22.12.1999**
(21) Anmeldenummer: 96945832.2
(22) Anmeldetag: 24.10.1996
(51) Int. Cl.: B07C 3/08, B65G 21/18

(54) **SORTIEREINRICHTUNG, INSBESONDERE FÜR POSTGUT**
SORTING ARRANGEMENT, IN PARTICULAR FOR ITEMS OF POST
DISPOSITIF DE TRI, NOTAMMENT POUR ENVOIS POSTAUX

(30) Priorität: 30.10.1995 DE 19540836
(43) Veröffentlichungstag der Anmeldung: 26.08.1998
(73) Patentinhaber: SIEMENS AKTIENGESELLSCHAFT, 80333 München (DE)
(72) Erfinder: SCHUSTER, Rudolf, D-85551 Kirchheim (DE)
(86) Internationale Anmeldenummer: DE9602037
(87) Internationale Veröffentlichungsnummer: WO9716363

(56) Entgegenhaltungen:
- WO-A-92/21596
- WO-A-95/02467
- FR-A- 2 596 299

## Beschreibung

Die auf Postsendungen, wie Briefen, Postkarten, Päckchen und dergleichen als Kennzahl für einen Ort, einen Zustellbereich, ein Postfach oder einen Großempfänger anzugebenden, maschinenlesbaren Postleitzahlen, ermöglichen eine rasche maschinelle Verteilung der Post. Das Sortieren der ankommenden Postsendungen erfolgt dabei mit Hilfe von steuerbaren Fördergutträgern, die in speziellen Eingabeplätzen manuell oder maschinell mit jeweils einer Postsendung beladen werden und diese Postsendung dann an einen, der jeweiligen Postleitzahl zugeordneten Sortierbehälter oder ein entsprechendes Sortierfach abgeben. Da aus Gründen der Platzersparnis der Wunsch besteht, sowohl die Eingabeplätze, als auch die Sortierbehälter bzw. Sortierfächer in verschiedenen Ebenen anzuordnen, müssen die an Fördereinrichtungen umlaufenden Fördergutträger gegebenenfalls auch verschiedene Höhenlagen überbrücken können. Nach der Übergabe der Postsendung an den zugeordneten Sortierbehälter oder das zugeordnete Sortierfach, kann der leere Fördergutträger beim Passieren eines Eingabeplatzes erneut mit einer Postsendung beladen werden.

Aus der US-A-3 300 026 ist eine Sortiereinrichtung für Postgut bekannt, die paarweise an einer Fördereinrichtung umlaufende Fördergutträger zur Aufnahme, zum Transport und zur steuerbaren Abgabe des Postguts aufweist. Die Fördereinrichtung umfaßt zwei im Abstand zueinander endlos umlaufende Ketten, die über entsprechende Rollen mäanderförmig geführt sind, und die Fördergutträger an mehreren übereinanderliegenden Ebenen an jeweils einer Reihe mit Sortierbehältern entlangführen. Durch den mäanderförmigen Verlauf der Fördereinrichtung in mehreren Ebenen ergibt sich eine relativ große Bauhöhe der Sortiereinrichtung mit einer entsprechend schlechten Zugänglichkeit der in den oberen Ebenen angeordneten Sortierbehälter.

Aus der WO 95/02468 ist eine Sortiereinrichtung, insbesondere für Postgut, bekannt, die mehrere an einer Fördereinrichtung umlaufende Fördergutträger zur Aufnahme, zum Transport und zur steuerbaren Abgabe des Förderguts an zugeordnete Sortierbehälter aufweist. Die Fördergutträger sind an umlaufenden Transportwagen der Fördereinrichtung befestigt, wobei die durch ein endlos umlaufendes Transportseil angetriebenen Transportwagen mit Rollen auf zwei in vertikalen Abstand zueinander ausgerichteten und sich in Transportrichtung erstreckenden Profilen geführt sind. Die Transportwagen laufen über eine höhengängige Umlenkung in zwei Ebenen um, so daß sie in jeder Ebene an jeweils zwei parallelen Reihen mit Sortierbehältern entlanggeführt werden können.

Bei der Fördereinrichtung der aus der WO 95/02468 bekannten Sortiereinrichtung werden die beispielsweise in einer rückwärtigen Beladezone der unteren Ebene mit Fördergut beladenen Fördergutträger auf gleicher Höhe nach vorne umgelenkt und dann an den auf der Vorderseite in der unteren Ebene in einer Reihe angeordneten Sortierbehältern vorbeitransportiert. Im Bereich der höhengängigen Umlenkung werden die Fördergutträger dann schräg nach oben in die obere Ebene geführt und dort an den auf der Rückseite in einer Reihe angeordneten Sortierbehältern vorbeitransportiert. Im Bereich der Stirnseite werden die Sortierbehälter dann auf gleicher Höhe nach vorne umgelenkt und dann an den auf der Vorderseite in einer Reihe angeordneten Sortierbehältern vorbeitransportiert. Im Bereich der höhengängigen Umlenkung werden die Fördergutträger dann schräg nach unten in die untere Ebene geführt und dort an den auf der Rückseite in einer Reihe angeordneten Sortierbehältern vorbeitransportiert. Im Bereich der höhengängigen Umlenkung verlaufen also die beiden Profile der Führung der Transportwagen und das Transportseil einmal schräg von unten nach oben und einmal in Gegenrichtung schräg von oben und nach unten. Eine Führung des Transportseils über zwei im Bereich der höhengängigen Umlenkung angeordnete, entsprechend große Seilräder, würde zu einer größeren Gesamtlänge der Sortiereinrichtung führen. Mit einer Führung des Transportseils über mehrere im Bereich der höhengängigen Umlenkung angeordnete Umlenkrollen, kann diese Vergrößerung der Gesamtlänge vermieden werden. Andererseits wird die Lebensdauer des Transportseils maßgeblich durch die beim Lauf des Seiles über die Umlenkrollen auftretende Seilbiegung bestimmt. Außerdem treten bei einer Führung des Transportseils über mehrere Umlenkrollen störende Laufgeräusche auf.

Der im Anspruch 1 angegebenen Erfindung liegt das Problem zugrunde, bei der aus der WO 95/02468 bekannten Sortiereinrichtung die Führung des Transportseils im Bereich der höhengängigen Umlenkung ohne Vergrößerung der Baulänge im Hinblick auf eine größere Lebensdauer des Transportseils und im Hinblick auf die Verringerung der Laufgeräusche zu verbessern.

Neben dem Sortieren und Verteilen von Postgut in öffentlichen Postämtern oder den Hauspostzentralen großer Firmen, kann eine erfindungsgemäße Sortiereinrichtung beispielsweise in Lagersystemen oder Kommissionierautomaten auch für vergleichbare Aufgaben eingesetzt werden, bei welchen mit Kodierungen versehene Waren oder Teile den jeweiligen Kodierungen zugeordneten Sortierbehältern oder Sortierfächern zugeführt werden.

Der Erfindung liegt die Erkenntnis zugrunde, daß die Vorteile einer Führung des Transportseils über ein großes Seilrad im Hinblick auf Lebensdauer und Laufruhe mit den Vorteilen einer Führung des Transportseils über mehrere Umlenkrollen im Hinblick auf einen geringen Platzbedarf vereinigt werden können. Hierzu wird das Transportseil über einen Radkranz geführt, welcher unter Verzicht auf eine mittige Lagerung seinerseits an seinem Innenumfang auf mehreren Stützrollen drehbar gelagert ist.

Vorteilhafte Ausgestaltungen der Erfindung sind in den Unteransprüchen angegeben.

Die Ausgestaltung nach Anspruch 2 ermöglicht eine weitere Reduzierung der Baulänge der Sortiereinrichtung. Durch das Ineinandergreifen der Radkränze ergibt sich eine Verkürzung in der Größenordnung des Radkranzdurchmessers.

Die Weiterbildung nach Anspruch 3 erleichtert sowohl die Montage, als auch die Demontage der beiden ineinandergreifenden Radkränze.

Die Ausgestaltung nach Anspruch 4 bringt eine weite Verbesserung im Hinblick auf die Laufruhe der Sortiereinrichtung, wobei sich gemäß Anspruch 5 insbesondere Einlagen der Radkränze aus Gummi bewährt haben.

Ein Ausführungsbeispiel der Erfindung ist in der Zeichnung dargestellt und wird im folgenden näher beschrieben.

Es zeigen
- Figur 1: einen aus fest angeordnetem Wandteil und beweglich angeordnetem Wandteil bestehenden Fördergutträger in perspektivischer Darstellung,
- Figur 2: das Funktionsprinzip einer Fördereinrichtung, an welcher an Transportwagen befestigte Fördergutträger gemäß Figur 1 umlaufen,
- Figur 3: eine perspektivische Darstellung von zwei aneinandergereihten Modulen einer mit Fördergutträgern gemäß Figur 1 und einer Fördereinrichtung gemäß Figur 2 ausgerüsteten Sortiereinrichtung,
- Figur 4: eine Seitenansicht einer aus Modulen gemäß Figur 3 aufgebauten Sortiereinrichtung,
- Figur 5: eine Draufsicht auf die Sortiereinrichtung gemäß Figur 4,
- Figur 6: eine perspektivische Darstellung über die Führung der Fördereinrichtung der in den Figuren 4 und 5 dargestellten Sortiereinrichtung über zwei Ebenen,
- Figur 7: die höhengängige Umlenkung der in Figur 6 dargestellten Fördereinrichtung mit der schematisch dargestellten Führung des Transportseils über zwei in einandergreifende Radkränze,
- Figur 8: eine Draufsicht auf einen Radkranz, der an seinem Innenumfang auf mehreren Stützrollen drehbar gelagert ist und
- Figur 9: einen radialen Schnitt durch den Radkranz und eine Stützrolle der in Figur 8 dargestellten Anordnung.

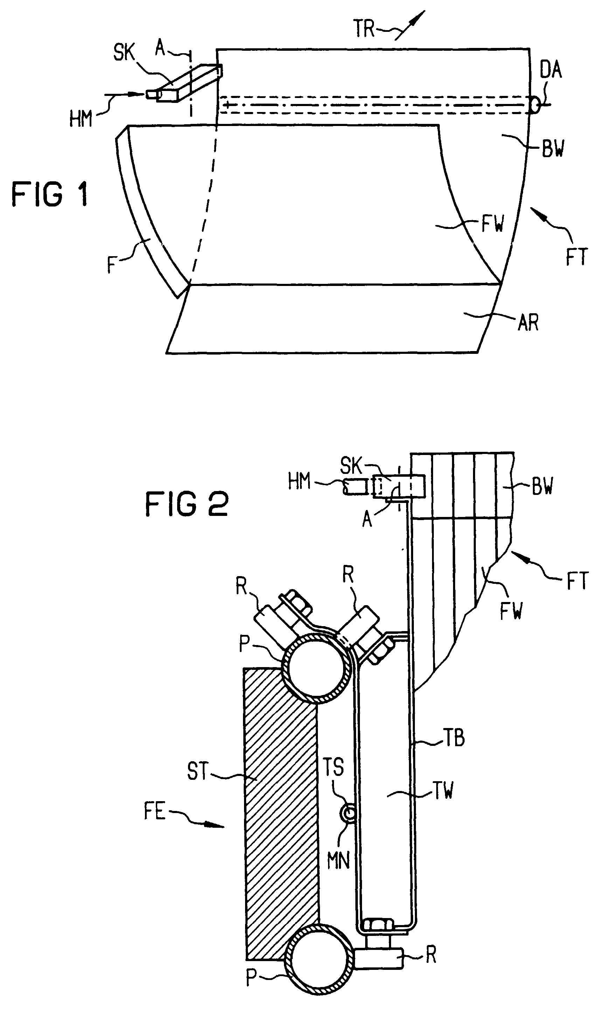

Figur 1 zeigt in perspektivischer Darstellung einen insgesamt mit FT bezeichneten Fördergutträger, der einen fest angeordneten Wandteil FW und einen beweglichen Wandteil BW umfaßt. Der bewegliche Wandteil BW ist dabei um eine quer zur Transportrichtung TR des Fördergutträgers FT ausgerichtete Drehachse DA schwenkbar.

Figur 1 zeigt die Schließstellung des Fördergutträgers FT, in welcher der fest angeordnete Wandteil FW und der beweglich angeordnete Wandteil BW, die beide jeweils nach außen gewölbt sind, eine im Querschnitt etwa V-förmige Aufnahmetasche für das Fördergut bilden. Die Sicherung der Schließstellung erfolgt durch eine Sperrklinke SK, die um eine mit A bezeichnete Achse drehbar und durch Betätigung eines Hubmagneten HM lösbar ist. Wird die Sperrklinke SK gelöst, so wird der bewegliche Wandteil BW um die Drehachse DA derart verschwenkt, daß sich ein nach unten offener Austragsschlitz des Fördergutträgers FT bildet. Die untere Verlängerung des beweglich angeordneten Wandteils BW bildet dabei eine sich nach unten an diesen Austragsschlitz anschließende Austragsrutsche AR, die entgegen der Transportrichtung TR geneigt ist.

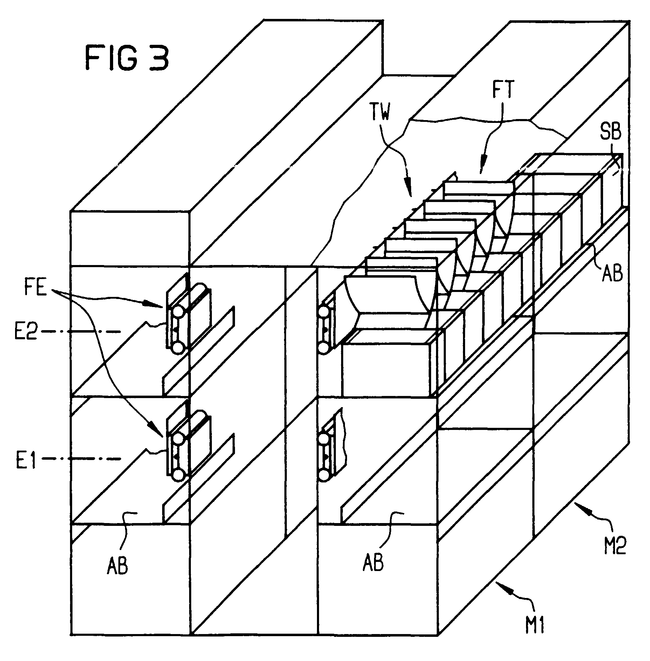

Figur 3 zeigt eine perspektivische Darstellung von zwei aneinandergereihten Modulen M1 und M2 einer mit Fördergutträgern FT gemäß Figur 1 ausgerüsteten Sortiereinrichtung. Dabei sind jeweils insgesamt fünf Fördergutträger FT an einem Transportwagen TW angebracht, der Bestandteil einer Fördereinrichtung FE ist und in zwei Ebenen E1 und E2 umläuft. Jedes Modul M1 und M2 besitzt in jeder Ebene E1 und E2 jeweils zwei Auflagebleche AB, auf welchen Sortierbehälter SB dicht aneinandergereiht aufgestellt werden können. Es ist zu erkennen, daß die Fördergutträger FT an den Transportwagen TW derart über den Sortierbehältern SB umlaufen, daß bei Betätigung der Sperrklinke SK (vergleiche Figur 1) das in Figur 3 nicht näher dargestellten Fördergut in einen der jeweiligen Kodierung zugeordneten Sortierbehälter SB abgeworfen werden kann.

Figur 2 zeigt nähere Einzelheiten der in Figur 3 dargestellten Fördereinrichtung FE. In dem hier dargestellten Querschnitt ist zu erkennen, daß der Transportwagen TW über mit R bezeichnete Rollen auf zwei sich in Transportrichtung TR (vergleiche Figur 1) erstreckenden, rohrförmigen Profilen P geführt ist. Die im vertikalen Abstand parallel zueinander ausgerichteten Profile P sind dabei in geradlinig verlaufenden Bereichen der Fördereinrichtung FE über sich ebenfalls in Transportrichtung TR erstreckende Stege ST miteinander verbunden, während in den Kurvenbereichen auf diese Stege ST verzichtet wird. Der Antrieb eines Transportwagens TW erfolgt über ein endlos umlaufendes Transportseil TS, an welchem der Transportwagen TW mit Hilfe eines Mitnehmers MN befestigt ist. Auf der dem Transportseil TS gegenüberliegenden Seite besitzt der Transportwagen TW ein Tragblech TB, an welchem die einzelnen Fördergutträger FT stirnseitig befestigt werden, und welches auch die Sperrklinken SK und die zugeordneten Hubmagnete HM trägt. Das Tragblech TB fungiert dabei als Halterung für die Drehachsen DA der beweglichen Wandteile BW, während die festen Wandteile FW der einzelnen Fördergutträger FT über stirnseitige Flansche F (vergleiche Figur 1), fest mit dem Tragbleche TB verbunden werden.

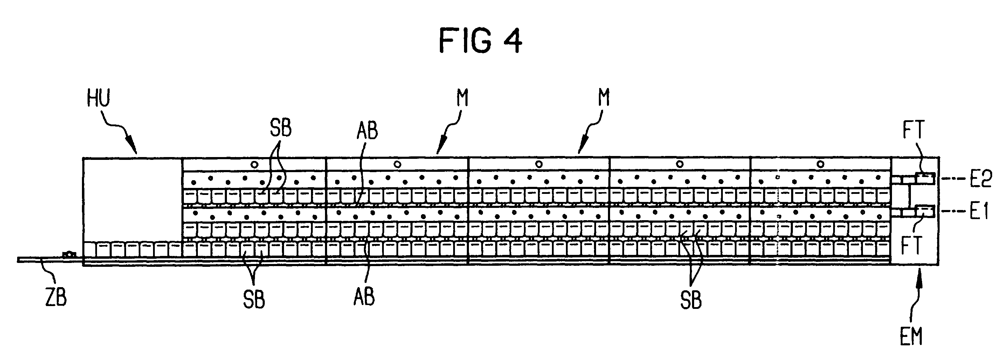

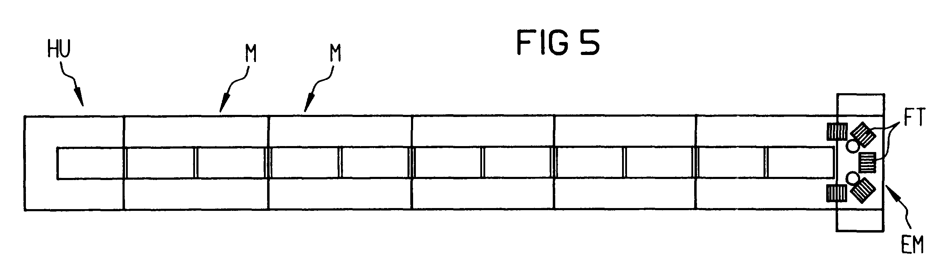

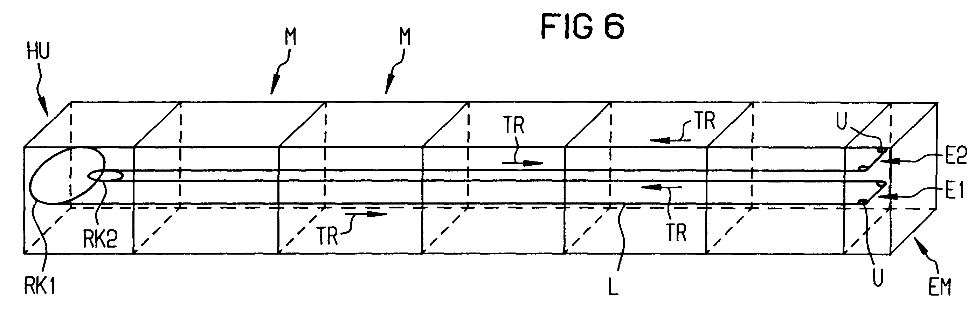

Die Figuren 4 und 5 zeigen eine aus einzelnen Modulen M zusammengesetzte Sortiereinrichtung in der Seitenansicht bzw. in der Draufsicht. Die einzelnen Module M entsprechen dabei den in Figur 3 dargestellten Modulen M1 und M2, wobei in Figur 6 jedoch noch ein zusätzliches, unterhalb der unteren Ebene E1 angeordnetes Zuführband ZB für die Bereitstellung leerer Sortierbehälter SB dargestellt ist. Bei der Entnahme eines vollen Sortierbehälters SB aus der Ebene E1 oder der Ebene E2 kann dann dieser durch einen auf dem Zuführband ZB bereitgestellten leeren Sortierbehälter SB ersetzt werden.

Bei der Darstellung gemäß den Figuren 4 und 5 befindet sich auf der linken Seite vor dem ersten Modul M eine höhengängige Umlenkung HU, während sich auf der rechten Seite an das letzte Modul M ein stirnseitiges Eingabemodul EM anschließt. Es ist zu erkennen, daß im Bereich dieses Eingabemoduls EM die einzelnen Fördergutträger FT von der Rückseite, von der Stirnseite, oder von der Vorderseite her beladen werden können, wobei die Beladung manuell oder maschinell vorgenommen werden kann.

Figur 6 zeigt in stark vereinfachter schematischer Darstellung die Führung der Fördereinrichtung FE (vergleiche Figuren 2 und 3) über die beiden Ebenen E1 und E2. Die Linie L zeigt dabei den räumlichen Verlauf des Transportseils TS (vergleiche Figur 4), wobei die Transportrichtung durch Pfeile TR aufgezeigt ist. Die Führung des Transportseils TS im Bereich der höhengängigen Umlenkung HU ist durch zwei ineinandergreifende Radkränze RK1 und RK2 angedeutet. Die Führung des Transportseils TS im Bereich des Eingabemoduls EM ist zur Vereinfachung der zeichnerischen Darstellung durch Umlenkrollen U angedeutet. Bei der tatsächlich realisierten Ausführungsform werden hier jedoch in der Ebene E1 ein Seilrad und in der Ebene E2 ein Radkranz eingesetzt. Das Seilrad in der Ebene E1 dient dabei gleichzeitig als Antrieb für die gesamte Fördereinrichtung FE (vergleiche Figur 2). Der räumliche Verlauf der Profile P (vergleiche Figur 2) parallel zur Linie L, ist in Figur 6 nicht erkennbar.

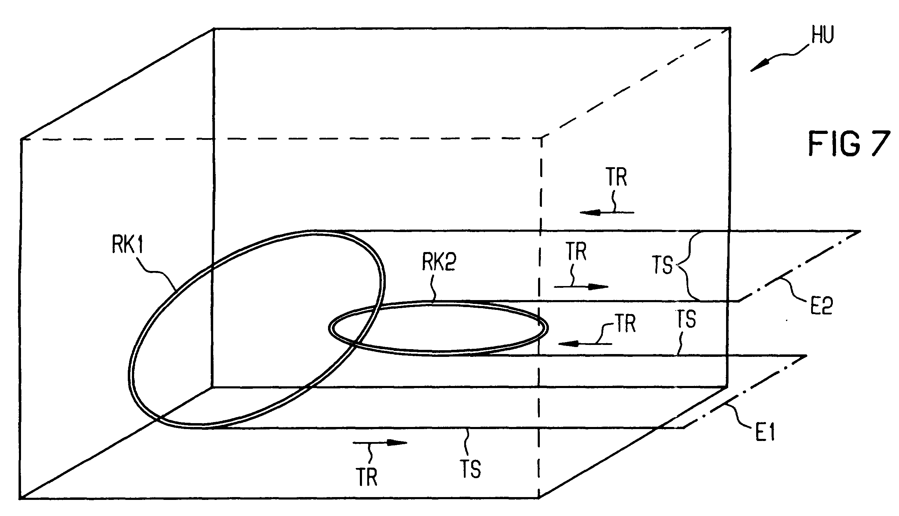

Figur 7 zeigt in stark vereinfachter schematischer Darstellung die höhengängige Umlenkung HU gemäß Figur 6 im Detail. Es ist zu erkennen, daß das Transportseil TS auf der Rückseite der oberen Ebene E2 in Transportrichtung TR von rechts nach links ankommt, über den Radkranz RK1 schräg nach vorne in die untere Ebene E1 umgelenkt und von dort in der Transportrichtung TR von links nach rechts weiterläuft. Im weiteren Verlauf kommt das Transportseil TS dann auf der Rückseite der unteren Ebene E1 in Transportrichtung TR von rechts nach links an und wird über den Radkranz RK2 schräg nach vorne in die obere Ebene E2 umgelenkt und dann in Transportrichtung TR von links nach rechts weitergeführt.

Der Verlauf der Profile P (vergleiche Figur 2), ist in Figur 7 nicht dargestellt. Die zur Führung der Transportwagen TW (vergleiche Figur 2) über den zweiten Radkranz RK2 erforderlichen Profile P, durchlaufen ebenfalls den Innenraum des ersten Radkranzes RK1. Die Durchmesser der beiden ineinandergreifenden Radkränze RK1 und RK2 sind dabei so gewählt, daß die Transportwagen TW mit den daran angebrachten Fördergutträgern FT (vergleiche Figur 2) den Radkranz RK1 innen ohne Behinderung durchlaufen können.

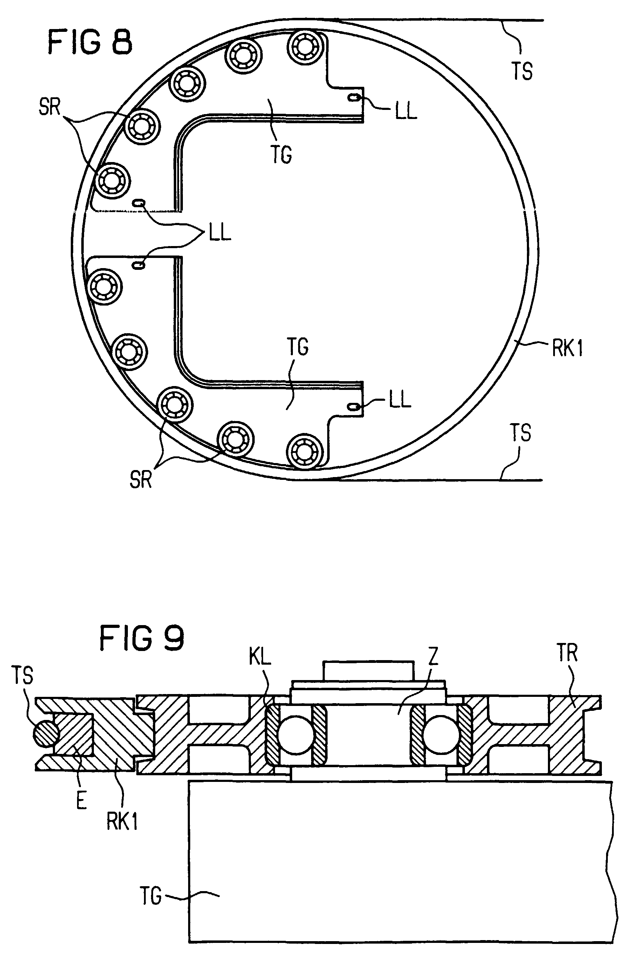

Figur 8 zeigt eine Draufsicht auf den Radkranz RK1, der an seinem Innenumfang auf insgesamt zehn Stützrollen SR drehbar gelagert ist. Dabei sind jeweils fünf Stützrollen SR in viertelkreisförmiger Verteilung auf Trägern TG angeordnet, die ihrerseits über Langlöcher LL justierbar am nicht näher dargestellten Maschinengestell befestigt werden.

Figur 9 zeigt einen radialen Schnitt durch den Radkrank RK1 und eine Trägerrolle TR, die über ein Kugellager KL auf einem Zapfen Z des Trägers TG drehbar angeordnet ist.

Der in Figur 9 dargestellte Schnitt zeigt auch, daß das Tragseil TS über eine Einlage E des Radkranzes RK1 geführt ist. Hierdurch wird die Laufruhe erheblich verbessert, wobei insbesondere die Mitnehmer MN für die Transportwagen TW (vergleiche Figur 2) ohne Rattergeräusche über die aus Gummi bestehende Einlage E geführt werden.

Aus Figur 8 ist ersichtlich, daß die Führung des Transportseils TS über den Radkranz RK1 im Hinblick auf die zu erwartende Lebensdauer des Transportseils TS der Führung über ein mittig gelagertes Seilrad gleichzusetzen ist. Andererseits hat die in Figur 8 dargestellte Anordnung den Vorteil, daß der zweite Radkranz RK2 (vergleiche Figur 7), sowie die Profile P und die Transportwagen TW mit den Fördergutträgern FT (vergleiche Figur 2) durch den ersten Radkranz RK1 hindurchgeführt werden können.

## Patentansprüche

1. Sortiereinrichtung, insbesondere für Postgut, mit mehreren an einer Fördereinrichtung (FE) umlaufenden Fördergutträgern (FT) zur Aufnahme, zum Transport und zur steuerbaren Abgabe des Förderguts,
wobei
- die Fördergutträger (FT) an umlaufenden Transportwagen (TW) der Fördereinrichtung (FE) befestigt sind, wobei
- die Transportwagen (TW) durch ein endlos umlaufendes Transportseil (TS) angetrieben sind, und wobei
- die Transportwagen (TW) über eine höhengängige Umlenkung (HU) der Fördereinrichtung (FE) in zwei Ebenen (E1,E2) umlaufen,
**dadurch gekennzeichnet**, daß
- das Transportseil (TS) im Bereich der höhengängigen Umlenkung (HU) über zwei Radkränze (RK1,RK2) geführt ist, wobei
- jeder Radkranz (RK1,RK2) an seinem Innenumfang auf mehreren Stützrollen (SR) drehbar gelagert ist.

2. Sortiereinrichtung nach Anspruch 1,
**dadurch gekennzeichnet**,
daß die beiden Radkränze (RK1,RK2) derart ineinandergreifen,
daß die außen über einen der beiden Radkränze (RK2) geführten Transportwagen (TW) den anderen Radkranz (RK1) innen durchlaufen.

3. Sortiereinrichtung nach Anspruch 2,
**dadurch gekennzeichnet**,
daß mindestens einer der beiden Radkränze (RK1, RK2) teilbar ausgebildet ist.

4. Sortiereinrichtung nach einem der Ansprüche 1 bis 3,
**dadurch gekennzeichnet**,
daß das Transportseil (TS) über nichtmetallische Einlagen (E) der Radkränze (RK1,RK2) geführt ist.

5. Sortiereinrichtung nach Anspruch 4,
**dadurch gekennzeichnet**,
daß die Einlagen (E) der Radkränze (RK1, RK2) aus Gummi. bestehen.

## Claims

1. Sorting apparatus, in particular for mail, having a plurality of conveyable-article carriers (FT) which circulate on a conveying device (FE) and are intended for receiving, for transporting and for discharging, in a controllable manner, the conveyable articles,
it being the case that
- the conveyable-article carriers (FT) are fastened on circulating transporting carriages (TW) of the conveying device (FE), it being the case that
- the transporting carriages (TW) are driven by an endlessly circulating transporting cable (TS), and it being the case that
- the transporting carriages (TW) circulate, via a vertical deflection (HU) of the conveying device (FE), in two planes (E1, E2),
characterized in that
- the transporting cable (TS) is guided over two wheel rims (RK1, RK2) in the region of the vertical deflection (HU), it being the case that
- the inner circumference of each wheel rim (RK1, RK2) is mounted rotatably on a plurality of supporting rollers (SR).

2. Sorting apparatus according to Claim 1, characterized in that the two wheel rims (RK1, RK2) interengage such that the transporting carriages (TW) which are guided over the exterior of one of the two wheel rims (RK2) run through the interior of the other wheel rim (RK1).

3. Sorting apparatus according to Claim 2, characterized in that at least one of the two wheel rims (RK1, RK2) is designed such that it can be divided.

4. Sorting apparatus according to one of Claims 1 to 3, characterized in that the transporting cable (TS) is guided over non-metallic inserts (E) of the wheel rims (RK1, RK2).

5. Sorting apparatus according to Claim 4, characterized in that the inserts (E) of the wheel rims (RK1, RK2) consist of rubber.

## Revendications

1. Dispositif de tri, notamment pour articles de courrier, comportant plusieurs supports (FT) d'articles transportés qui circulent sur un convoyeur (FE) et sont destinés à recevoir, transporter et délivrer de façon commandée les articles transportés,
- les supports (FT) d'articles transportés étant fixés sur des chariots (TW) de transport circulants du convoyeur (FE),
- les chariots (TW) de transport étant entraînés par un câble (TS) de transport circulant sans fin,
- et les chariots (TW) de transport circulant dans deux plans (E1, E2) au moyen d'un renvoi (HU) en hauteur du convoyeur (FE),
**caractérisé** en ce que
- le câble (TS) de transport passe, dans la région du renvoi (HU) en hauteur, sur deux couronnes (RK1, RK2),
- chaque couronne (RK1, RK2) étant montée à rotation, sur sa périphérie intérieure, sur plusieurs galets (SR) d'appui.

2. Dispositif de tri suivant la revendication 1, **caractérisé** en ce que les deux couronnes (RK1, RK2) s'engagent l'une dans l'autre de telle sorte que les chariots (TW) de transport dirigés extérieurement sur une (RK2) des deux couronnes parcourent intérieurement l'autre (RK1) roue-couronne.

3. Dispositif de tri suivant la revendication 2, **caractérisé** en ce qu'au moins une des deux couronnes (RK1, RK2) est réalisée en deux parties.

4. Dispositif de tri suivant l'une des revendications 1 à 3, **caractérisé** en ce que le câble (TS) de transport passe sur des garnitures (E) non métalliques des couronnes (RK1, RK2).

5. Dispositif de tri suivant la revendication 4, **caractérisé** en ce que les garnitures (E) des couronnes (RK1, RK2) sont en caoutchouc.
